# EUROPÄISCHE PATENTSCHRIFT

(11) **EP 3 409 555 B1**
(45) Veröffentlichungstag und Bekanntmachung des Hinweises auf die Patenterteilung: **18.05.2022**
(21) Anmeldenummer: 18175545.5
(22) Anmeldetag: 01.06.2018
(51) Int. Cl.: B61D 17/02

(54) **SCHIENENFAHRZEUG MIT VERKLEIDUNGSVORRICHTUNG**
RAIL VEHICLE WITH CLADDING DEVICE
VEHICULE FERROVAIIRE AVEC DISPOSITIF D'HABILLAGE

(30) Priorität: 02.06.2017 DE 102017112257
(43) Veröffentlichungstag der Anmeldung: 05.12.2018
(73) Patentinhaber: Bombardier Transportation GmbH, 10785 Berlin (DE)
(72) Erfinder: Bialoscek, André, 14482 Potsdam (DE); Fischer, Helmut, 13158 Berlin (DE)
(74) Vertreter: Zimmermann & Partner Patentanwälte mbB

(56) Entgegenhaltungen:
- EP-A1- 0 348 930
- WO-A1-2016/091046
- DE-A1- 1 804 547
- DE-A1- 2 542 779
- DE-C- 952 910
- JP-A- H0 840 264
- JP-B2- 4 216 695

## Beschreibung

Die Erfindung betrifft ein Schienenfahrzeug mit Verkleidungsvorrichtung, insbesondere ein Schienenfahrzeug mit einer Außenverkleidung , mit einem Verkleidungselement und wenigstens einer Befestigungsvorrichtung zur Befestigung des Verkleidungselementes am Schienenfahrzeug, sowie ein Schienenfahrzeug mit einer Verkleidungsvorrichtung.

Schienenfahrzeuge sind typischerweise mit Aufnahmeräumen für elektrische Komponenten versehen, die z.B. Akkumulatoren, Hilfsbetriebeumrichter, Transformatoren oder Kondensatoren umfassen können. Während des Betriebes des Fahrzeuges können z.B. aufgrund einer Fehlbedienung, Überlastung oder Alterung Beschädigungen an den Bauteilen entstehen, die zu einer Explosion der Komponente führen können, oder zu Ausgasungen, wobei sich die austretenden Gase in einem Aufnahmeraum ansammeln und mit der enthaltenen Luft ein explosionsgefährdendes Gasgemisch bilden. Entzündet sich dieses Gasgemisch, beispielsweise aufgrund eines an einer elektrischen Komponente auftretenden Lichtbogens, wirkt sich dies unmittelbar auf die Verkleidung des Aufnahmeraums aus.

Die Verkleidung eines Aufnahmeraums kann durch den Druck einer Explosion nach außen gedrückt, plastisch verformt oder weggesprengt werden. Die Befestigungsvorrichtungen der Verkleidung können beschädigt werden und im ungünstigen Fall gänzlich abreißen.

In bekannten Lösungen für das obige Problem wird der Explosionsdruck durch nachgiebige, deformierbare Verkleidungsteile aufgefangen. Die auftretende Energie wird idealerweise durch eine Deformation der Verkleidung aufgezehrt, ohne dass die Befestigungsvorrichtungen abreißen. Um die Deformation der Verkleidung zu vereinfachen, können Schlitze in der Verkleidung vorgesehen sein, die zwar aus ästhetischen Gründen und zum Schutz gegen Umwelteinflüsse mit weicherem Material wieder abgedichtet werden, aber die Deformation der Verkleidung bei auftretenden Explosionen vereinfachen und ggf. ein Aufreißen der Verkleidung ermöglichen, ohne dass sich Verkleidungsteile vom Fahrzeug lösen.

Die o.g. Lösungen verhindern zwar, dass sich Verkleidungsteile vom Fahrzeug lösen. Es verbleibt allerdings der Nachteil, dass die verformten Verkleidungsteile das vordefinierte Lichtraumprofil des Fahrzeuges verletzen. Dies kann insbesondere an einer Fahrzeugflanke bzw. an einer Schürze des Fahrzeugs dazu führen, dass die für das Fahrzeug zulässigen Abmessungen überschritten werden und Kollisionen mit der Infrastruktur des Schienenweges auftreten, die wiederum zum Abreißen der Verkleidungsteile und zur Gefährdung von am Schienenweg befindlichen Personen führen können.

Alternative Lösungen aus dem Stand der Technik sind Fanghaken und Laschen, die eine durch eine Explosion beschädigte Verkleidung auffangen. Diese Lösungen bilden somit eine Verliersicherung für Verkleidungsteile, erlauben aufgrund ihrer geringen Tragfähigkeit allerdings nur relativ leichte Verkleidungen. Zum technischen Umfeld wird auf die DE 18 04 547 A1, EP 0 348 930 A1 und JP H08 40264 A verwiesen.

Aufgabe der vorliegenden Erfindung ist folglich, für den Fall einer Explosion in einem Aufnahmeraum, eine verbesserte Lösung gegen den Verlust von Verkleidungsteilen zu schaffen und die Gefahr einer Verletzung des Lichtraumprofils des Fahrzeuges zu vermeiden.

Diese Aufgabe wird mittels eines Schienenfahrzeugs nach Anspruch 1 gelöst, indem die Befestigungsvorrichtung bei Auftreten einer vorbestimmten Druckbelastung auf das Verkleidungselement in einer Öffnungsrichtung auslenkbar ausgestaltet ist.

Weitere Ausführungsformen, Modifikationen und Verbesserungen ergeben sich anhand der folgenden Beschreibung und der beigefügten Ansprüche.

Indem die Befestigungsvorrichtung auslenkbar ist, werden Beschädigungen an der Verkleidung weitestgehend vermieden. Die Befestigungsvorrichtung ist insbesondere im Betriebszustand der Verkleidungsvorrichtung, also bei verschlossener und/oder abgeschlossener Verkleidungsvorrichtung, bei Auftreten einer vorbestimmten Druckbelastung auf das Verkleidungselement in einer Öffnungsrichtung auslenkbar ausgestaltet. Bevorzugt erfolgt die Auslenkung des Verkleidungselementes rein elastisch, d.h. ohne jegliche plastische Verformung, so dass die Auswirkungen einer Explosion auf die Verkleidung des Fahrzeuges vollständig reversibel sind. Die durch eine Explosion eingebrachte kinetische Energie, die von der Innenseite eines Aufnahmeraums auf eine Verkleidung treffen kann, kann zumindest teilweise durch die elastische Auslenkung oder Verformung der Befestigungsvorrichtung aufgezehrt werden. Die Befestigungsvorrichtung bleibt bevorzugt auch im Explosionsfall fest mit dem Verkleidungselement verbunden und begrenzt somit den Bewegungsraum des Verkleidungselementes.

Erfindungsgemäß umfasst die Befestigungsvorrichtung einen Energiespeicher, der durch die Auslenkung der Befestigungsvorrichtung mit Energie aufladbar ausgestaltet ist, wobei die gespeicherte Energie in eine Schließrichtung auf das Verkleidungselement wirkt. Somit kann das Verkleidungselement durch die elastische ausgelenkte Befestigungsvorrichtung auch wieder in Richtung seiner ursprünglichen Schließposition zurückgeführt werden. Sofern keine bleibenden Verformungen an dem Verkleidungselement entstehen, kann das Verkleidungselement in seine Ursprungsposition zurückgeführt werden. Eine Beeinträchtigung des Lichtraumprofils des Schienenfahrzeuges kann somit gänzlich vermieden werden.

Erfindungsgemäß umfasst die wenigstens eine Befestigungsvorrichtung eine Befestigungsschnittstelle und eine Verschlussschnittstelle , wobei der Energiespeicher die Befestigungsschnittstelle und die Verschlussschnittstelle elastisch miteinander verbindet. Durch die Befestigungsschnittstelle ist die Befestigungsvorrichtung unmittelbar an dem Wagenkasten des Schienenfahrzeuges befestigt. Die Verschlussschnittstelle kann dazu dienen, das Verkleidungselement mit der Befestigungsvorrichtung zu verbinden, z.B. über ein in dem Verkleidungselement integriertes Schloss, dessen Riegel in die Verschlussschnittstelle eingreift. Der elastisch ausgestaltete Energiespeicher zwischen Befestigungsschnittstelle und Verschlussschnittstelle ermöglicht folglich eine elastische Dehnung zwischen der mit dem Wagenkasten zumindest in Öffnungsrichtung im Wesentlichen starr verbundenen Befestigungsschnittstelle und der mit dem Verkleidungselement im Wesentlichen starr verbundenen Verschlussschnittstelle.

Es können ein oder mehrere Energiespeicher vorgesehen sein. Das Verkleidungselement kann an drei oder vier Punkten über Energiespeicher mit dem Wagenkasten verbunden sein, um während des Betriebes des Schienenfahrzeuges eine sichere Halterung des Verkleidungselementes zu gewährleisten und im Fall einer Explosion im Aufnahmeraum eine parallele Verschiebung des Verkleidungselementes zu ermöglichen, durch welche am Umfang des Verkleidungselementes ein Spalt entsteht, durch den der aus der Explosion resultierende Druck entweichen kann.

Im Idealfall ist das Druckentlastungelement derart ausgelegt, dass bei einer Explosion in einem von dem Verkleidungselement verschlossenen Aufnahmeraum das Verkleidungselement der durch die Explosion ausgelösten Druckwelle mit angemessener Geschwindigkeit ausweichen kann, so dass wenigstens ein Großteil des Explosionsdruckes entweichen kann, ohne dass der zuvor aufgestaute Druck zu einer Verformung des Verkleidungselementes führt.

Um einen durch das Verkleidungselement verschlossenen Aufnahmeraum einfach öffnen zu können und/oder bei einer Ausweichbewegung des Verkleidungselementes aufgrund einer Explosion Drehbewegungen zu ermöglichen, kann zwischen der Befestigungsschnittstelle und dem Energiespeicher eine gelenkige Verbindung vorgesehen sein. Das Verkleidungselement kann z.B. ein Teil einer Fahrzeugschürze sein, die aufklappbar am Wagenkasten befestigt ist. Entsprechend kann im Falle einer Explosion im Aufnahmeraum eine Aufklappbewegung erzeugt werden, die den Druck im Aufnahmeraum entweichen lässt, bevor das Verkleidungselement durch den elastisch ausgelenkten Energiespeicher wieder verschlossen wird.

In einer weiteren vorteilhaften Ausgestaltung der Erfindung kann wenigstens ein im Wesentlichen starres Befestigungsmittel vorgesehen sein, das parallel zum Energiespeicher wirkt, wobei das starre Befestigungsmittel ausgestaltet sein kann, sich bei einer vorbestimmten Belastung zu lösen. Das starre Befestigungsmittel überbrückt somit den Energiespeicher bzw. schließt den Kraftfluss vom Verkleidungselement zum Wagenkasten kurz, so dass sich dieses im normalen Betrieb des Schienenfahrzeuges nicht elastisch verformen kann. Auf diese Weise ist sichergestellt, dass unbeabsichtigte Bewegungen des Verkleidungselementes, die z.B. die Bedienung beim Öffnen oder Schließen erschweren oder zu Klappergeräuschen führen können, vermieden werden. Das Befestigungsmittel ist ausgelegt, sich erst bei einer vorbestimmten Belastung, die z.B. aufgrund einer Explosion im Aufnahmeraum erreicht werden kann, zu lösen. Nachdem sich das Befestigungsmittel gelöst hat, kann das Verkleidungselement über den Energiespeicher ausgelenkt werden.

Gemäß einer alternativen Weiterbildung der Erfindung kann zwischen Energiespeicher und Verschlussschnittstelle ein Auflager vorgesehen sein, das den Bewegungsraum der Verschlussschnittstelle in eine Schließrichtung begrenzt und die Position der Verschlussschnittstelle wenigstens in Schließrichtung festlegt. Das Auflager ist dabei für eine Befestigung und/oder Festlegung am Wagenkasten ausgestaltet. Somit ist ein Gegenhalt vorhanden, der eine übermäßige Bewegung des Verkleidungselementes in Schließrichtung unterbindet. Entgegen der Schließrichtung hält das Druckentlastungselement die Verschlussschnittstelle in Position. Die Verschlussschnittstelle kann an dem Auflager in Schließrichtung geführt sein, um mögliche Bewegungsrichtungen der Verschlussschnittstelle zu definieren.

In einer bevorzugten Ausführung der Erfindung weist der Energiespeicher im Betriebszustand der Verkleidungsvorrichtung, bei nicht ausgelenkter Befestigungsvorrichtung, gespeicherte Energie auf, die in Schließrichtung auf das Verkleidungselement und/oder die Verschlussschnittstelle wirkt. Die Verschlussschnittstelle kann in Schließrichtung aufgrund der durch den Energiespeicher erzeugten Vorspannung aufliegen. Somit fixiert der Energiespeicher die Verschlussschnittstelle unter Vorspannung und unbeabsichtigte Bewegungen des Verkleidungselementes werden weitestgehend ausgeschlossen. Des Weiteren kann durch eine Vorspannung des Energiespeichers für den Fall einer Explosion die Geschwindigkeit des Öffnens und/oder Schließens der Verkleidung eingestellt werden und sichergestellt werden, dass das Verkleidungselement nach einer Explosion vollständig in seine Ursprungsposition zurückbewegt wird.

Eine weitere bevorzugte Weiterbildung der Erfindung sieht vor, dass die Verschlussschnittstelle durch ein bei Auftreten einer vorbestimmten Bewegung des Verkleidungselementes lösbares Befestigungsmittel mit dem Auflager verbunden ist. Die Verschlussschnittstelle kann beispielsweise derart ausgestaltet sein, dass wenn eine Kraft von innen auf das Verkleidungselement wirkt, die ausreicht, den Energiespeicher entgegen seiner Wirkrichtung bzw. Federkraft zu dehnen bzw. zu längen, das Befestigungsmittel automatisch aus einer Befestigungsposition herausbewegt wird. Das Befestigungsmittel kann beispielsweise von einem Haken oder einer Klammer gebildet sein, der oder die bei Wegfallen einer durch den Energiespeicher aufgebrachten Vorspannung durch das Eigengewicht in eine gelöste Position rutscht.

Alternativ kann die Verschlussschnittstelle durch eine in Öffnungsrichtung verlaufende Führung an dem Auflager festgelegt sein. Vorzugsweise ist das Befestigungsmittel von einem Führungsorgan, z.B. einen Führungsbolzen oder -stift, gebildet, das in einer Führungsaufnahme des Auflagers eingesetzt ist und die Verschlussschnittstelle im Betriebszustand der Verkleidungsvorrichtung entgegen und/oder quer zur Schließrichtung in einer vordefinierten Betriebsposition hält. Das Führungsorgan kann einen Anschlag umfassen, der entgegen der Federkraft des Energiespeichers wirkt und die Verschlussschnittstelle in Schließrichtung in seiner Betriebsposition hält.

Um trotz der begrenzten Platzverhältnisse im Bereich der Befestigung des Verkleidungselementes auch größere Auslenkbewegungen zu erlauben, kann das Führungsorgan bzw. das Auflager in Öffnungsrichtung offen ausgestaltet sein. Das Führungsorgan kann eine vordefinierte Versatzlänge aufweisen, entlang derer die über das Führungsorgan befestigte Verschlussschnittstelle beweglich geführt ist, während die Verschlussschnittstelle das Führungsorgan nach Überschreiten der Versatzlänge verlässt. Somit sind kurze Führungsorgane möglich, die entsprechend weniger Bauraum beanspruchen. Wirkt eine Kraft aus dem Aufnahmeraum auf das Verkleidungselement, durch die das Führungsorgan entgegen der Federkraft des Energiespeichers über die vordefinierte Versatzlänge hinaus bewegt wird, verlässt das Führungsorgan die Führungsaufnahme in dem Auflager und das Verkleidungselement kann über die Versatzlänge hinaus ausgelenkt werden.

In einer weiteren bevorzugten Ausgestaltung der Erfindung ist an dem Verkleidungselement eine Schließvorrichtung angeordnet, das in einem Betriebszustand der Verkleidungsvorrichtung, d.h. in geschlossenem Zustand in die Verschlussschnittstelle eingreift. Die Schließvorrichtung kann beispielsweise wenigstens einen Riegel umfassen, der bei verschlossener Verkleidungsvorrichtung in eine Riegelaufnahme an der Verschlussschnittstelle eingreift. Weil bei einer Öffnung des Verkleidungselements aufgrund einer Explosion der Verschlussschnittstelle gemeinsam mit dem Verkleidungselement in Öffnungsrichtung bewegt wird, kann die Schließvorrichtung verschlossen bleiben, ohne die Bewegung des Verkleidungselements aufgrund der Explosion zu behindern. Ein unbeabsichtigtes oder unberechtigtes Öffnen des Verkleidungselementes wird im Betriebszustand der Verkleidungsvorrichtung hingegen durch die in Schließrichtung wirkende Federspannung des Energiespeichers verhindert.

Gemäß einer weiteren zweckmäßigen Weiterbildung der Erfindung kann das Verkleidungselement ein Gelenk umfassen, durch welches das Verkleidungselement am Schienenfahrzeug festlegbar ist, wobei das Gelenk auf einer der Befestigungsschnittstelle gegenüberliegenden Seite des Verkleidungselementes angeordnet ist. Das Gelenk kann beispielsweise als Scharnier ausgestaltet sein. Insbesondere kann das Gelenk zur Vereinfachung der Demontage der Verkleidungsvorrichtung aushängbar ausgestaltet sein. Ein Gelenk ermöglicht eine gute Bedienbarkeit des Verkleidungselementes beim Öffnen und Schließen, weil das Verkleidungselement durch das Gelenk zugleich gehalten und geführt wird. Um dennoch optimale Wirkung der erfindungsgemäßen Befestigungsvorrichtung zu erzielen, ist diese bevorzugt an einer dem Gelenk gegenüberliegenden Seite des Verkleidungselementes positioniert.

Um die Auslenkung des Verkleidungselements im Fall einer Explosion im Aufnahmeraum zu begrenzen und das für das Fahrzeug vorgesehene Lichtraumprofil nicht unnötig zu verletzen, kann ein Anschlagelement vorgesehen werden, das die maximale Ausdehnung des Energiespeichers begrenzt. Das Anschlagelement kann ein Seil sein, das parallel zum Energiespeicher angeordnet ist und das bei einer vordefinierten maximalen Auslenkung des Verkleidungselementes gespannt ist.

Ein erfindungsgemäßes Schienenfahrzeug mit einer Verkleidungsvorrichtung nach einem der oben genannten Ansprüche kann mit einem Aufnahmeraum versehen sein, der durch eine der oben beschriebenen Ausführungsformen einer Verkleidungsvorrichtung verschlossen ist. Ein derartiges Schienenfahrzeug hat den Vorteil, dass das Lichtraumprofil des Fahrzeuges auch nach einer Explosion in einem Aufnahmeraum nicht verletzt wird.

Die beiliegenden Zeichnungen veranschaulichen drei erfindungsgemäße Ausführungsformen und dienen zusammen mit der Beschreibung der Erläuterung der Prinzipien der Erfindung.
Fig. 1 ist eine schematische, teilweise geschnittene Seitenansicht eines ersten Ausführungsbeispiels eines Aufnahmeraumes eines Schienenfahrzeuges mit erfindungsgemäßer Verkleidungsvorrichtung in einem Betriebszustand;
Fig. 2 ist eine weitere schematische, teilweise geschnittene Seitenansicht der Ausführungsform der Fig. 1 in einem durch eine Explosion im Aufnahmeraum geöffneten Zustand;
Fig. 3 ist eine schematische, teilweise geschnittene Seitenansicht eines zweiten Ausführungsbeispiels eines Aufnahmeraums eines Schienenfahrzeuges mit erfindungsgemäßer Verkleidungsvorrichtung;

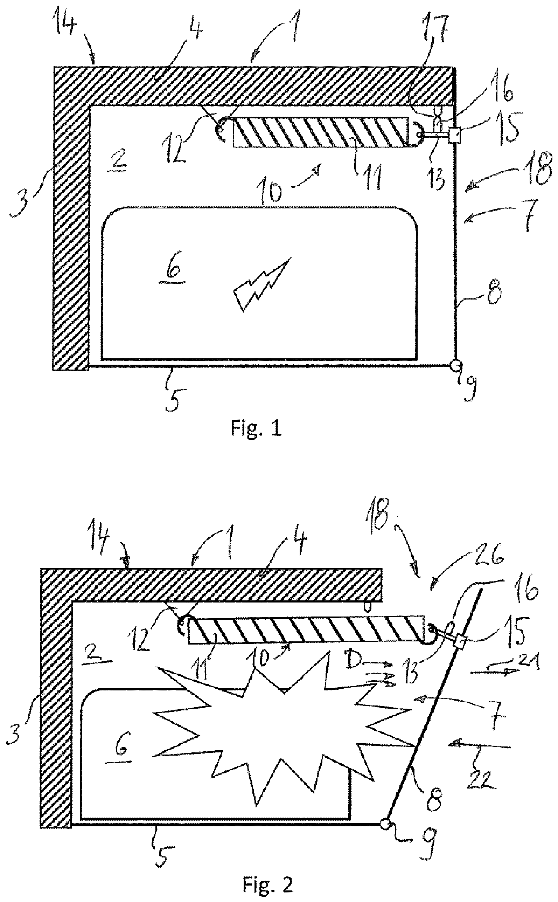

Fig. 1 zeigt einen Ausschnitt eines Wagenkastens 14 eines Schienenfahrzeuges, und zwar einen Aufnahmeraum 1 einer Unterfluranordnung mit einem Aufnahmevolumen 2. Das Aufnahmevolumen 2 wird seitlich durch eine Seitenwand 3, nach oben durch eine Deckenwand 4 und nach unten durch einen Boden 5 begrenzt. Die Seitenwand 3, die Deckenwand 4 und der Boden 5 sind Teil eines Wagenkastens 14, insbesondere einer Unterflurkonstruktion eines Wagenkastens 14. In den Aufnahmeraum 1 ist eine Komponente 6 aufgenommen, die Leistungselektronik enthält. Der Aufnahmeraum 1 weist eine Öffnung 7 auf, die durch ein Verkleidungselement 8 verschlossen ist. Das Verkleidungselement 8 bildet eine Schürze des Schienenfahrzeuges und hat zugleich die Funktion einer Klappe, um einen einfachen Zugang zum Aufnahmevolumen 2 zu ermöglichen. Die Komponente 6 kann durch die Öffnung 7 in den Aufnahmeraum 1 des Schienenfahrzeuges eingebracht und zu Wartungszwecken bearbeitet oder entnommen werden.

Um die Bedienung des Verkleidungselementes 8 benutzerfreundlicher zu gestalten, ist ein Gelenk 9 vorgesehen, welches als Scharnier ausgestaltet ist. Das Verkleidungselement 8 ist um das Gelenk 9 schwenkbar und wird auch in geöffneter Position zumindest teilweise von diesem getragen.

Das Verkleidungselement 8 ist zudem über eine Befestigungsvorrichtung 10 mit dem Aufnahmeraum 1 bzw. dem Wagenkasten 14, in welchen der Aufnahmeraum 1 integriert ist, verbunden. Die Befestigungsvorrichtung 10 umfasst einen Energiespeicher 11, der zwischen einer Befestigungsschnittstelle 12 und einer Verschlussschnittstelle 13 angeordnet ist. Der Energiespeicher 11 ist als Federelement ausgestaltet, und zwar als Zugfeder. Der Energiespeicher 11 verbindet die Befestigungsschnittstelle 12 und die Verschlussschnittstelle 13. Der Energiespeicher 11 ist elastisch dehnbar ausgestaltet, um im Falle einer Explosion eine Auslenkung des Verkleidungselementes 8 zu ermöglichen, ohne dass die Verbindung zwischen Befestigungsschnittstelle 12 und Verschlussschnittstelle 13 gelöst wird.

Das Verkleidungselement 8 ist über eine Schließvorrichtung 15 lösbar mit der Verschlussschnittstelle 13 verbunden. Die Verschlussschnittstelle 13 ist abschnittsweise in die Schließvorrichtung 15 aufgenommen und lösbar mit dieser verbunden. Für die hier nicht dargestellte lösbare Verbindung zwischen Verschlussschnittstelle 13 und Schließvorrichtung 15 kann beispielsweise ein Riegel vorgesehen sein, der über die Schließvorrichtung 15 betätigt wird.

Um die Funktion der Schließvorrichtung 15 sicherzustellen und eine störungsfreie Bedienung des Aufnahmeraumes 1 zu gewährleisten, sind die Verschlussschnittstelle 13 sowie das im verschlossenen Zustand des Aufnahmeraums 1 an ihr befestigte Verkleidungselement 8 in einer vordefinierten Position fixiert. Dazu ist ein im Wesentlichen starres Befestigungsmittel 16 vorgesehen, das die Verschlussschnittstelle 13 mit dem Wagenkasten 14 bzw. der Deckenwand 4 verbindet.

Die im Aufnahmeraum 1 aufgenommene Komponente 6 kann Leistungselektronikelemente enthalten, wie z.B. Leistungskondensatoren, die aufgrund ihrer Bauart z.B. bei fehlerhafter Bedienung, aufgrund zu starker Ströme oder einer Alterung des isolierenden Materials explodieren können. Für diesen Fall weist in dem gezeigten Ausführungsbeispiel das Befestigungsmittel 16 eine Sollbruchstelle 17 auf, die bei einer vordefinierten Krafteinwirkung auf das Verkleidungselement 8, die bei einer Explosion im Aufnahmevolumen 2 auftreten kann, bricht und eine Schwenkbewegung des Verkleidungselements 8 ermöglicht.

In der gezeigten Ausführungsform der Erfindung bildet die Befestigungsvorrichtung 10, zu der der Energiespeicher 11, die Befestigungsschnittstelle 12, die Verschlussschnittstelle 13, die Schließvorrichtung 15 und das Befestigungsmittel 16 gehören, gemeinsam mit dem Verkleidungselement 8, dem Gelenk 9 und der Schließvorrichtung 15 die erfindungsgemäße Verkleidungsvorrichtung 18.

In Fig. 2 ist ein Zustand der Verkleidungsvorrichtung 18 während einer Explosion der Komponente 6 gezeigt. Aufgrund eines Explosionsdruckes D, der in einer Öffnungsrichtung 21 auf das Verkleidungselement 8 wirkt, ist die Sollbruchstelle 17 des Befestigungsmittels 16 gelöst und das Verkleidungselement 8 nach außen geschwenkt. In Folge der Bewegung des Verkleidungselementes 8 ist zudem der elastische Energiespeicher 11 in die Länge gezogen. Entsprechend hat sich die über den Energiespeicher 11 aufgebrachte Zugkraft erhöht, so dass das Verkleidungselement 8 bei Nachlassen des Druckes D in die in Fig. 1 gezeigte Betriebsposition zurückbewegt werden kann. Zwischen dem Verkleidungselement 8 und der Deckenwand 4 des Aufnahmeraums 3 ist in diesem Zustand eine Druckentlastungsöffnung 26 vorhanden, durch welche der Explosionsdruck entweichen kann.

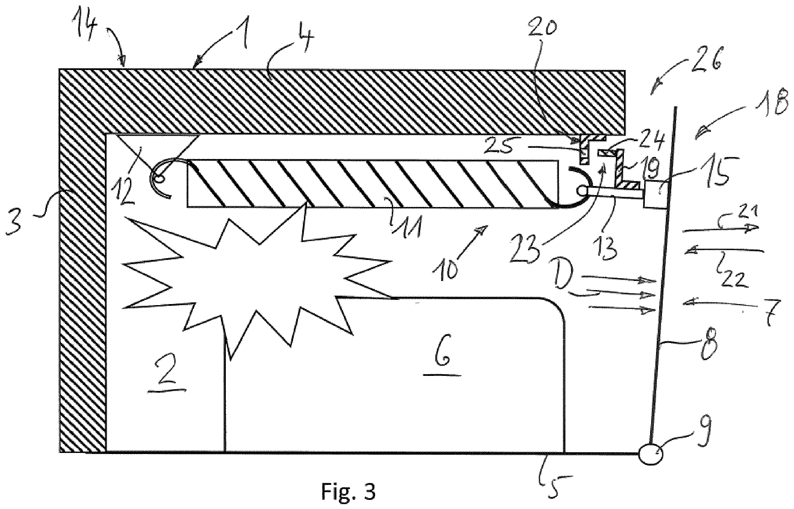

Fig. 3 zeigt ein weiteres Ausführungsbeispiel einer erfindungsgemäßen Verkleidungsvorrichtung 18, die sich in erster Linie in der Ausgestaltung der Befestigungsvorrichtung 10 unterscheidet. Die Verkleidungsvorrichtung 18 ist in einem Zustand während einer Explosion gezeigt, in welchen die Verkleidungsvorrichtung 18 ausgelenkt bzw. geöffnet ist. Zwischen dem Energiespeicher 11 und der Verschlussschnittstelle 13 ist ein Befestigungsmittel 19 angeordnet, das im Gegensatz zum Befestigungsmittel 16 des Ausführungsbeispiels der Figuren 1 und 2 im Betriebszustand beweglich mit dem Wagenkasten 14 verbunden ist. Dazu ist an der Deckenwand 4 ein Auflager 20 vorgesehen. Das Auflager 20 begrenzt die Bewegung des Befestigungsmittels 19 in Schließrichtung 22, lässt aber eine unbegrenzte Bewegung in Öffnungsrichtung 21 zu.

Im Betriebszustand der Verkleidungsvorrichtung 18, d.h. wenn sich das Verkleidungselement 8 in der geschlossenen Position befindet, liegt das Befestigungsmittel 19 auf dem Auflager 20 auf. Das Auflager 20 definiert somit die Position des Befestigungsmittels 19 in dem Betriebszustand der Verkleidungsvorrichtung 18. Eine Bewegung des Verkleidungselements 8 in Öffnungsrichtung 21 wird durch den Energiespeicher 11 verhindert. Idealerweise ist das Druckentlastungelement 11 mit einer Vorspannung versehen, die auf die Verschlussschnittstelle 13 wirkt und sowohl im Betriebszustand der Verkleidungsvorrichtung 18 als auch bei einem für Wartungs- oder Montagezwecke geöffnetem Verkleidungselement 8 sicherstellt, dass das Befestigungsmittel 19 auf dem Auflager 20 aufliegt.

Um das Befestigungsmittel 19 im Betriebszustand der Verkleidungsvorrichtung 18, d.h. bei geschlossenem Verkleidungselement 8, quer zur Öffnungsrichtung 21 zu fixieren und im Fall einer Explosion im Aufnahmeraum 1 in Öffnungsrichtung 21 zu führen, ist eine Führung 23 vorgesehen. Die Führung 23 umfasst ein am Befestigungsmittel 19 angeordnetes Führungsorgan 24 und eine am Auflager 20 angeordnete Führungsaufnahme 25. Das Führungsorgan 24 ist als Führungsbolzen ausgestaltet, die Führungsaufnahme 25 als Durchgangsloch.

Bei verschlossenem Aufnahmeraum 1, d.h. wenn das Verkleidungselement 8 über die Schließvorrichtung 15 mit der Verschlussschnittstelle 13 verbunden ist, kann das Verkleidungselement 8 nur entgegen der Federspannung des Energiespeichers 11 bewegt werden. Eine solche Bewegung des Verkleidungselements 8, die beispielsweise durch einen Explosionsdruck D ausgelöst werden kann, wird in Öffnungsrichtung 21 entlang dem Führungsorgan 24 geführt. Fällt der Explosionsdruck D vor Erreichen des Endes des Führungsorgans 24 ab, kann sich das Verkleidungselement 8 entlang der Führung 23 wieder in Schließrichtung 22 in seine Ursprungsposition bewegen.

Steigt der Druck in dem Aufnahmeraum 1 auf ein Maß, das eine größere Druckentlastungsöffnung 26 für den Druckausgleich fordert, kann das Verkleidungselement 8 über die maximale Führungsstrecke der Führung 23 hinaus ausgelenkt werden. In diesem Fall verlässt das Führungsorgan 24 die Führungsaufnahme 25 in Öffnungsrichtung 21. Auch wenn der Explosionsdruck D derart groß ist, dass das Führungsorgan 24 mit der Bewegung des Verkleidungselementes 8 die Führungsaufnahme 25 verlässt, wird die Verkleidungsvorrichtung 18 nicht beschädigt. Das Führungsorgan 24 wird zwar nicht unbedingt automatisch wieder in die Führungsaufnahme 25 einrasten, kann aber aufgrund der Elastizität des Energiespeichers 11 durch Aufbringen einer Zugkraft manuell wieder in die Führungsaufnahme 25 eingeführt werden.

### Bezugszeichenliste

- 1: Aufnahmeraum
- 2: Aufnahmevolumen
- 3: Seitenwand
- 4: Deckenwand
- 5: Boden
- 6: Komponente
- 7: Öffnung
- 8: Verkleidungselement
- 9: Gelenk
- 10: Befestigungsvorrichtung
- 11: Energiespeicher
- 12: Befestigungsschnittstelle
- 13: Verschlussschnittstelle
- 14: Wagenkasten
- 15: Schließvorrichtung
- 16: Befestigungsmittel
- 17: Sollbruchstelle
- 18: Verkleidungsvorrichtung
- 19: Befestigungsmittel
- 20: Auflager
- 21: Öffnungsrichtung
- 22: Schließrichtung
- 23: Führung
- 24: Führungsorgan
- 25: Führungsaufnahme
- 26: Druckentlastungsöffnung
- D: Explosionsdruck

## Patentansprüche

1. Schienenfahrzeug mit Verkleidungsvorrichtung (18), insbesondere Schienenfahrzeug mit einer Außenverkleidung, mit einem Verkleidungselement (8) und wenigstens einer Befestigungsvorrichtung (10) zur Befestigung des Verkleidungselementes (8) am Schienenfahrzeug, wobei die Befestigungsvorrichtung bei Auftreten einer vorbestimmten Druckbelastung auf das Verkleidungselement (8) in einer Öffnungsrichtung (21) auslenkbar ausgestaltet ist; wobei
ein Aufnahmeraum (1) für eine explosionsgefährdende Komponente (6) durch die Verkleidungsvorrichtung (18) verschlossen ist, **dadurch gekennzeichnet, dass**
die Befestigungsvorrichtung (10) einen Energiespeicher (11) umfasst, der durch die Auslenkung der Befestigungsvorrichtung (10) mit Energie aufladbar ausgestaltet ist, wobei die gespeicherte Energie in eine Schließrichtung (22) auf das Verkleidungselement (8) wirkt;
die wenigstens eine Befestigungsvorrichtung (10) eine Befestigungsschnittstelle (12) und eine Verschlussschnittstelle (13) umfasst, wobei der Energiespeicher (11) die Befestigungsschnittstelle (12) und die Verschlussschnittstelle (13) elastisch miteinander verbindet;
die Befestigungsvorrichtung (10) durch die Befestigungsschnittstelle (12) unmittelbar an einem Wagenkasten des Schienenfahrzeuges befestigt ist;
die Verschlussschnittstelle (13) das Verkleidungselement (8) mit der Befestigungsvorrichtung (10) verbindet; und
der Energiespeicher (11) elastisch dehnbar ausgestaltet ist, um im Falle einer Explosion eine Auslenkung des Verkleidungselementes (8) zu ermöglichen, ohne dass die Verbindung zwischen Befestigungsschnittstelle (12) und Verschlussschnittstelle (13) gelöst wird.

2. Schienenfahrzeug mit Verkleidungsvorrichtung (18) nach Anspruch 1, **dadurch gekennzeichnet, dass** wenigstens ein im Wesentlichen starres Befestigungsmittel (16, 19) vorgesehen ist, das parallel zum Energiespeicher (11) wirkt, wobei das starre Befestigungsmittel (16, 19) ausgestaltet ist, sich bei einer vorbestimmten Belastung zu lösen.

3. Schienenfahrzeug mit Verkleidungsvorrichtung (18) nach Anspruch 1 oder 2, **dadurch gekennzeichnet, dass** zwischen Energiespeicher (11) und Verschlussschnittstelle (13) ein Auflager (20) vorgesehen ist, das den Bewegungsraum der Verschlussschnittstelle (13) in eine Schließrichtung (22) begrenzt und die Position der Verschlussschnittstelle (13) wenigstens in Schließrichtung (22) festlegt.

4. Schienenfahrzeug mit Verkleidungsvorrichtung (18) nach einem der Ansprüche 1 bis 3, **dadurch gekennzeichnet, dass** der Energiespeicher (11) im Betriebszustand der Verkleidungsvorrichtung (18), bei nicht ausgelenkter Befestigungsvorrichtung (10), gespeicherte Energie aufweist, die in Schließrichtung (22) auf das Verkleidungselement (8) und/oder die Verschlussschnittstelle (13) wirkt.

5. Schienenfahrzeug mit Verkleidungsvorrichtung (18) nach Anspruch 3, **dadurch gekennzeichnet, dass** die Verschlussschnittstelle (13) durch ein bei Auftreten einer vorbestimmten Bewegung des Verkleidungselementes (8) lösbares Befestigungsmittel (19) mit dem Auflager (20) verbunden ist.

6. Schienenfahrzeug mit Verkleidungsvorrichtung (18) nach Anspruch 3, **dadurch gekennzeichnet, dass** die Verschlussschnittstelle (13) durch eine im Wesentlichen in Öffnungsrichtung (21) verlaufende Führung (23) an dem Auflager (20) festgelegt ist.

7. Schienenfahrzeug mit Verkleidungsvorrichtung (18) nach Anspruch 6, **dadurch gekennzeichnet, dass** die Führung (23) in Öffnungsrichtung (21) offen ausgestaltet ist.

8. Schienenfahrzeug mit Verkleidungsvorrichtung (18) nach einem der Ansprüche 1 bis 7, **dadurch gekennzeichnet, dass** an dem Verkleidungselement (8) eine Schließvorrichtung (15) angeordnet ist, die in einem Betriebszustand der Verkleidungsvorrichtung (18) in die Verschlussschnittstelle (13) eingreift.

9. Schienenfahrzeug mit Verkleidungsvorrichtung (18) nach einem der Ansprüche 1 bis 8, **dadurch gekennzeichnet, dass** das Verkleidungselement (8) ein Gelenk (9) umfasst, durch welches das Verkleidungselement (8) am Schienenfahrzeug festlegbar ist, wobei das Gelenk (9) auf einer der Befestigungsschnittstelle (12) gegenüberliegenden Seite des Verkleidungselementes (8) angeordnet ist.

10. Schienenfahrzeug mit Verkleidungsvorrichtung (18) nach einem der Ansprüche 1 bis 9, **dadurch gekennzeichnet, dass** ein Anschlagelement vorgesehen ist, welches die maximale Ausdehnung des Energiespeichers (11) begrenzt.

## Claims

1. Rail vehicle with cladding device (18), in particular rail vehicle with an outer cladding, comprising a cladding element (8) and at least one fastening device (10) for fastening the cladding element (8) to the rail vehicle, wherein the fastening device is provided to be deflectable in an opening direction (21) upon occurrence of a predetermined pressure load on the cladding element (8); wherein
a receiving space (1) for a potentially explosive component (6) is closed by the cladding device (18),
**characterized in that**
the fastening device (10) comprises an energy storage device (11) which is is configured to be chargeable with energy by the deflection of the fastening device (10), the stored energy acting on the cladding element (8) in a closing direction (22);
the at least one fastening device (10) comprises a fastening interface (12) and a locking interface (13), wherein the energy storage device (11) elastically connects the fastening interface (12) and the locking interface (13) to each other;
the fastening device (10) is fastened directly to a rail car body of the rail vehicle by the fastening interface (12);
the locking interface (13) connects the cladding element (8) to the fastening device (10); and
the energy storage device (11) is configured to be elastically expandable to allow deflection of the cladding element (8) in the event of an explosion without releasing the connection between the fastening interface (12) and the locking interface (13).

2. The rail vehicle with cladding device (18) according to claim 1, **characterized in that** at least one essentially rigid fastening means (16, 19) is provided which acts parallel to the energy storage device (11), wherein the rigid fastening means (16, 19) is configured to release upon a predetermined load.

3. The rail vehicle with cladding device (18) according to claim 1 or 2, **characterized in that** a support (20) is provided between the energy storage device (11) and the locking interface (13), which limits the movement space of the locking interface (13) in a closing direction (22) and fixes the position of the locking interface (13) at least in the closing direction (22).

4. The rail vehicle with cladding device (18) according to any one of claims 1 to 3, **characterized in that** the energy storage device (11) in the operating state of the cladding device (18), when the fastening device (10) is not deflected, comprises stored energy which acts on the cladding element (8) and/or the locking interface (13) in the closing direction (22).

5. The rail vehicle with cladding device (18) according to claim 3, **characterized in that** the locking interface (13) is connected to the support (20) by a fastening means (19) which is releasable upon occurrence of a predetermined movement of the cladding element (8).

6. The rail vehicle with cladding device (18) according to claim 3, **characterized in that** the locking interface (13) is fixed to the support (20) by a guiding (23) extending essentially in the opening direction (21).

7. The rail vehicle with cladding device (18) according to claim 6, **characterized in that** the guide (23) is formed to be open in the opening direction (21).

8. The rail vehicle with cladding device (18) according to any one of claims 1 to 7, **characterized in that** a locking device (15) is arranged at the cladding element (8), which engages in the locking interface (13) in an operating state of the cladding device (18).

9. The rail vehicle with cladding device (18) according to any one of claims 1 to 8, **characterized in that** the cladding element (8) comprises a joint (9) by which the cladding element (8) can be fixed to the rail vehicle, wherein the joint (9) is arranged on a side of the cladding element (8) opposite the fastening interface (12).

10. The rail vehicle with cladding device (18) according to any one of claims 1 to 9, **characterized in that** a stop element is provided which limits the maximum expansion of the energy storage device (11).

## Revendications

1. Véhicule ferroviaire comportant un dispositif d'habillage (18), en particulier véhicule ferroviaire comportant un habillage extérieur, comportant un élément d'habillage (8) et au moins un dispositif de fixation (10) pour la fixation de l'élément d'habillage (8) sur le véhicule ferroviaire, le dispositif de fixation étant conçu de manière à pouvoir être dévié dans une direction d'ouverture (21) lors de l'apparition d'une charge de pression prédéfinie sur l'élément d'habillage (8) ;
un espace de réception (1) pour un composant (6) présentant un risque d'explosion étant fermé par le dispositif d'habillage (18), **caractérisé en ce que**
le dispositif de fixation (10) comprend un accumulateur d'énergie (11) qui est conçu pour être chargé en énergie par la déviation du dispositif de fixation (10), l'énergie accumulée agissant sur l'élément d'habillage (8) dans une direction de fermeture (22) ;
l'au moins un dispositif de fixation (10) comprenant une interface de fixation (12) et une interface de fermeture (13), l'accumulateur d'énergie (11) reliant de manière élastique l'interface de fixation (12) et l'interface de fermeture (13) ;
le dispositif de fixation (10) étant fixé directement à une caisse du véhicule ferroviaire par l'interface de fixation (12) ;
l'interface de fermeture (13) reliant l'élément d'habillage (8) au dispositif de fixation (10) ; et
l'accumulateur d'énergie (11) étant conçu de manière élastiquement extensible pour permettre, en cas d'explosion, une déviation de l'élément d'habillage (8) sans que la liaison entre l'interface de fixation (12) et l'interface de fermeture (13) soit rompue.

2. Véhicule ferroviaire comportant un dispositif d'habillage (18) selon la revendication 1, **caractérisé en ce qu'**au moins un moyen de fixation (16, 19) sensiblement rigide est prévu, lequel moyen de fixation agit parallèlement à l'accumulateur d'énergie (11), le moyen de fixation rigide (16, 19) étant conçu pour se libérer lors d'une charge prédéfinie.

3. Véhicule ferroviaire comportant un dispositif d'habillage (18) selon la revendication 1 ou 2, **caractérisé en ce qu'**un support (20) est prévu entre l'accumulateur d'énergie (11) et l'interface de fermeture (13), lequel support limite l'espace de déplacement de l'interface de fermeture (13) dans une direction de fermeture (22) et fixe la position de l'interface de fermeture (13) au moins dans la direction de fermeture (22).

4. Véhicule ferroviaire comportant un dispositif d'habillage (18) selon l'une des revendications 1 à 3, **caractérisé en ce que** l'accumulateur d'énergie (11) comporte, dans l'état de fonctionnement du dispositif d'habillage (18), lorsque le dispositif de fixation (10) n'est pas dévié, de l'énergie accumulée qui agit dans la direction de fermeture (22) sur l'élément d'habillage (8) et/ou l'interface de fermeture (13).

5. Véhicule ferroviaire comportant un dispositif d'habillage (18) selon la revendication 3, **caractérisé en ce que** l'interface de fermeture (13) est reliée au support (20) par un moyen de fixation (19) pouvant être libéré lors de l'apparition d'un mouvement prédéfini de l'élément d'habillage (8).

6. Véhicule ferroviaire comportant un dispositif d'habillage (18) selon la revendication 3, **caractérisé en ce que** l'interface de fermeture (13) est fixée au support (20) par un guide (23) s'étendant sensiblement dans la direction d'ouverture (21).

7. Véhicule ferroviaire comportant un dispositif d'habillage (18) selon la revendication 6, **caractérisé en ce que** le guide (23) est conçu de manière ouverte dans la direction d'ouverture (21).

8. Véhicule ferroviaire comportant un dispositif d'habillage (18) selon l'une des revendications 1 à 7, **caractérisé en ce qu'**un dispositif de fermeture (15) est disposé au niveau de l'élément d'habillage (8), lequel dispositif de fermeture entre en prise dans l'interface de fermeture (13) dans un état de fonctionnement du dispositif d'habillage (18).

9. Véhicule ferroviaire comportant un dispositif d'habillage (18) selon l'une des revendications 1 à 8, **caractérisé en ce que** l'élément d'habillage (8) comprend une articulation (9) par laquelle l'élément d'habillage (8) peut être fixé au véhicule ferroviaire, l'articulation (9) étant disposée sur un côté de l'élément d'habillage (8) opposé à l'interface de fixation (12).

10. Véhicule ferroviaire comportant un dispositif d'habillage (18) selon l'une des revendications 1 à 9, **caractérisé en ce qu'**un élément de butée est prévu, lequel élément de butée limite l'extension maximale de l'accumulateur d'énergie (11).
